# EUROPEAN PATENT SPECIFICATION

(11) **EP 0 458 941 B1**
(45) Date of publication and mention of the grant of the patent: **12.04.1995**
(21) Application number: 91901334.2
(22) Date of filing: 20.12.1990
(51) Int. Cl.: G06F 3/033, G06K 11/18

(54) **CONTROL MEANS FOR A COMPUTER SYSTEM AND DISPLAY UNIT WITH SUCH CONTROL MEANS**
RECHNERSTEUERUNGSMITTEL UND ANZEIGEEINRICHTUNG MIT SOLCHEM STEUERUNGSMITTEL
DISPOSITIF DE COMMANDE DE SYSTEMES INFORMATIQUES ET UNITE D'AFFICHAGE POURVUE DE CE DISPOSITIF DE COMMANDE

(30) Priority: 20.12.1989 SE 8904287; 26.02.1990 SE 9000679
(43) Date of publication of application: 04.12.1991
(73) Proprietor: ICL Systems Aktiebolag, S-164 93 Kista (SE)
(72) Inventor: MALMKVIST, Hans, S-123 51 Farsta (SE)
(74) Representative: Kierkegaard, Lars-Olov
(86) International application number: SE9000861
(87) International publication number: WO9109363

(56) References cited:
- US-A- 4 562 347
- US-A- 4 891 632
- IBM Technical Disclosure Bulletin, Vol. 26, No. 11, April 1984 P.J. KENNEDY: "Hand-Held Data Input Device", see page 5826 - page 5827.
- PATENT ABSTRACTS OF JAPAN, Vol 12, No 144, P697, Abstract of JP 62-263525, publ 1987-11-16 MATSUSHITA ELECTRIC IND. CO. LTD.
- MC, April 1989, p 164: "Praktisch: die Rollkugel - Tastatur".

## Description

### Control Means for a Computer System and Display Unit With Such Control Means

The present invention relates to control means for a computer system having an electronic display unit and being of the kind set forth in the preamble of Claim 1. The invention also relates to a display unit according to the premable of Claim 5, provided with an inventive control means.

The general purpose of the invention is to enable novel and flexible working methods to be performed.

Known display units may be CRT-units and will then normally form a stationary or fixed monitor. The display unit, however, may also advantageously have the form of a so-called flat screen plate, for instance of the LCD-type, wherein a lighting unit is mounted on the back of the screen plate or the screen plate is provided with side lighting, e.g. in the case of a lap-top unit. Furthermore, there can be used a separate screen plate which lacks the provision of an illuminating or lighting unit, a so-called OH-screen, wherein this screen plate can be placed on an overhead projector, for the purpose of projecting an enlarged image of the plate with cursor onto a wall or a fabric screen.

The use of software with graphic user interfaces is increasing. This results in a decrease in the general need to feed commands to the computer system through an alpha-numerical keyboard. Instead, feeding of commands to the data system with the aid of a movable cursor or indicator in combination, for instance, with "pull down menus" and icons on the display unit is being used to an increasing extent. The cursor is normally manipulated with the aid of a so-called mouse unit. Interaction with the program is achieved by first indicating a specific region or point on the display unit, for instance a specific part of a menu, with the aid of the mouse and cursor, and then activating, or to use general parlance, "clicking on" the indicated point on the display unit, by depressing keys on the mouse and therewith initiating key functions incorporated in the mouse. These keys are therefore often referred to as "click" keys.

The mouse forms a manually maneuvereable control means which comprises a housing having a flat undersurface which enables the housing to rest against a flat support surface, such as a table surface, normally through the intermediary of a supporting pad or plate.

The housing carries the click keys and a further manually operated control device which is connected through a transducer to control electronics which communicate with the computer, which in turn controls cursor movement.

The manually manipulated control device normally has the form of a ball journalled for rotation in the housing, this ball normally being made of rubber in order to generate the friction desired. The ball lies against two mutually perpendicular rolling bars or rods mounted within the housing and connected to transducers, these bars also holding the ball in place. Part of the ball lies freely in an opening provided in the housing bottom and comes into contact with the supporting pad or plate when the mouse is placed thereon. When the housing is moved in different directions, the ball will rotate to a corresponding degree in these directions, so as to steer the cursor to the desired position on the display unit.

Normally, two or three click keys are provided on top of the housing, adjacent the forward part of said housing, in a position where the keys can be reached comfortably with the index finger and long finger of the hand.

The known mouse is normally provided with side walls which define the sides of the housing, of which the left side wall forms a support for the thumb of one hand and the right side wall forms a support for the small finger and/or the so-called ring finger, so that the mouse can be gripped on mutually opposite sides thereof, when the hand is placed over the housing with the index finger and long finger positioned on the keys. Subsequent to having moved the housing on the supporting pad, so as to rotate the ball, and the cursor has been moved to the position desired, the keys can be manipulated with the fingers without changing the gripping position of the hand around the housing. In the case of certain operations or movements, it is also necessary to ensure that the keys can be held depressed at the same time as the ball is rotated in order to move the cursor.

The known mouse can be gripped comfortably, provided that the bottom surface of the housing lies on the support pad or plate, with the ball in contact therewith. The fingers lie on the upper surface of the housing and are able to execute ergonomically comfortable finger-bending movements in directions towards the upper surface of the housing, and therewith against the keys. The thumb is able to adopt a natural and relaxed position against the left side wall, which is normally located in a position generally perpendicular to the bottom surface of the housing. Thus, when the thumb is located in its natural rest position, the thumb joints will lie substantially parallel with the side wall, so that when the thumb is bent it will support approximately straight against the left side wall.

However, normal use of the conventional mouse incurs disadvantages in the case of a computer-based working location in which a display unit is positioned in front of the user, the working duties of whom are carried out over long working periods and often require the mouse to be moved and the keys manipulated a large number of times. This work involves a certain degree of physical and psyhic stress, which is substantially constant, in order to perform the work with the precision required. The operator works in substantially one and the same attitude, with the right lower-arm resting on the table and the hand gripping around the mouse so as to be able to move the mouse on a special mouse pad or plate placed on the table surface.

Requisite mouse movements on the mouse pad require a commensurate amount of space on the table or on the pad or plate on which the mouse ball is intended to roll. Consequently, it is often necessary to reserve for the mouse a relatively large free area on one side of the keyboard. This limits the possibility of freely configuring the working area. Many working environments completely lack the possibility of creating space for mouse movement. Furthermore, it is necessary that the table surface or the supporting pad or plate will generate sufficient friction for the ball to be operated with the high precision desired.

Movement of the mouse normally requires the whole hand to be moved, and in the majority of cases also the lower and the upper arm, which in turn places strain on the elbow and shoulder joints. This can result in extremely troublesome tiredness in the arm over long working periods. The joints under strain can become physically worn. The working attitude of the user, when manipulating the known mouse on the mouse supporting pad or plate on the table, cannot be changed to any appreciable extent without impairing working conditions. Consequently, the user normally remains seated in essentially the same position while one arm of the user performs greater or smaller movements in order to move the mouse.

However, for medical reasons, among other things, there is a desire to be able to change the working position or attitude of a user in a manner which will not render his work on the computer and display unit more difficult. It is a well known fact that the relatively static working position in computer-based locations results in various physical complaints, such as general tiredness, tension in the neck muscles, eye irritation, headaches, etc.

With regard to these drawbacks, it has been established scientifically that the ability of the user to avail himself of information from an electronic display unit is influenced negatively by excessively static working positions over shorter or longer periods, depending on the ability of the user concerned to withstand the aforesaid negative factors.

Other factors which, for instance, influence the speed at which text can be read from the screen include the viewing angle, the reading distance, illumination, contrast, luminance, etc. The user of the known mouse and display unit is often unable to influence and optimize several of these factors in a comfortable and simple fashion and consequently the changes required in the factors concerned are not made as often as would be desired.

If it were possible to handle the mouse in a manner which did not depend on the provision of a flat supporting surface, considerable functional advantages would be afforded since the mouse could then be used to communicate with the OH-screen of an overhead projector, as mentioned in the introduction, or with a video projection system, through the computer. This will enable the presenter himself to control the presentation without the aid of an assistant using a conventional mouse, i.e. in the case when the presenter wishes to stand in the vicinity of the fabric screen on which the image or picture is projected on an enlarged scale.

It has been found possible, in principle, to lift the mouse from the mouse supporting surface and to hold the mouse freely in the hand for manipulation of the ball and the keys. The hand position, however, becomes uncomfortable and ergonomically wrong to such an extent that the hand of the user quickly becomes tired. The known mouse is therefore totally unsuitable for use in this way.

It is also possible to grip the known mouse with two hands, although manipulation of the operating devices becomes very awkward, in common with the aforesaid case.

The object of the invention is therefore to provide an improved control means and display unit of the aforesaid kinds with which the aforesaid drawbacks associated with the known mouse and known display units are substantially eliminated or at least considerably reduced.

This object is achieved with a control means and with a display unit of the kinds set forth respectively in the preamble of Claim 1 and Claim 5 and which have the characteristic features set forth in respective characterizing clauses of Claim 1 and Claim 5.

In brief, the invention can be said to consist in the novel feature of moving the position of the ball of a conventional mouse from the bottom of the housing to one side wall thereof and positioning the ball such that said ball or some other control device can be manipulated comfortably with the thumb of the hand with which the housing is gripped, either when the housing rests on a horizontal support pad or plate or is held freely in the hand. Similar to the grip around the housing of the known mouse, the grip around the inventive mouse is such that the thumb is held against one side wall, i.e. the wall on which the ball or some other control device is located in accordance with the invention, and is manipulated by the thumb while the small finger and/or the ring finger support against the other side wall, with the index finger and the long finger resting on the keys on the upper side of the housing.

The inventive control means thus affords the important advantages of enabling the control means to be held freely in the hand, wherewith the side wall on which the ball or some other control device is located is preferably turned upwards so that the thumb can rest comfortably on the ball or said other control device, while the other side wall is turned downwards and rests on the small finger and/or the ring finger. The side of the housing on which the keys are mounted thus faces towards one side, so that the keys can be readily manipulated by the fingers.

The greatest advantages afforded by the inventive control means, however, is that it can be detachably connected to a display unit which includes a thin, lightweight and freely movable, flat electronic screen plate of the LCD-type.

According to the invention, the housing of the control means is then detachably connected to one side edge of the screen or display unit, and the control device, for instance in the form of a ball, is mounted on that side of the housing which faces in the same direction as the upper surface of the display unit and in a position such that the thumb of the hand gripping the housing is able to manipulate the control device at the same time as the other fingers of the hand can manipulate the other control devices.

Such a display unit used with the inventive control means can be moved as a separate unit to different positions in relation to the user, e.g. in a horizontal lying position and/or inclined position on a table, or may be held freely in the hands and, for instance, placed on one knee of the user, wherein the thumb of one hand of the user is in contact with the operating device of said operating means for control of cursor movement, in all positions, while remaining fingers are in contact with remaining control devices, such as click keys.

The inventive control means may also be detachably connected to one side wall of the keyboard of a computer system.

These and other features characteristic of the invention and advantages afforded thereby will be evident from the following description of embodiments of the invention and the use of such embodiments.

Figure 1 is a side view of one embodiment of an inventive control means.

Figure 2 is a view from above.

Figure 3 is a view from beneath.

Figure 4 is a front view.

Figure 5 is a side view of another embodiment of the inventive control means.

Figure 6 is a view from above.

Figure 7 is a front view.

Figure 8 is a rear view.

Figure 9 is a front view of a display unit provided on the side edges thereof with means for detachable connection of the control means illustrated in Figures 1-4 or the control means illustrated in Figures 1-8, said control means being provided on its undersurface with means for detachable connection to corresponding connector means on the side edges of the display unit.

Figure 10 is an end view of the display unit shown in Figure 9.

Figure 11 illustrates a hand with the thumb turned upwards.

Figure 12 illustrates schematically the control means shown in Figures 1-4, wherein approximately the same grip can be used as that used with the control means shown in Figures 5-8.

Figure 13 illustrates schematically a hand with the thumb turned to the left.

Figure 14 illustrates the manner in which the hand shown in Figure 14 grips around the control means shown in Figures 1-4 when the undersurface of the control means rests on a table.

Figure 15 illustrates schematically a seated user who grips over the inventive control means placed on one side of a display unit resting on the table.

Figure 16 illustrates the manner in which the user manipulates an inventive control means placed on the table in front of an angled display unit.

Figure 17 illustrates schematically a user inclined comfortably in a chair and holding the display unit on one knee, the control means being detachably connected to the right side wall of the display unit and the control means being comfortably manipulated by the thumb of the right hand to effect cursor movement.

Figure 18 is a schematic rear view of the user shown in Figure 18, with the display unit resting on one knee and the control means connected to the right side wall of the display unit.

Figure 19 illustrates the display screen of a display unit placed on an overhead apparatus so as to enable an enlarged picture of the picture on the screen plate to be projected onto a fabric screen or onto a wall, wherein the user holds the inventive control means and is located at a distance from the computer but is able to manipulate the cursor on the enlarged picture with the fingers of the right hand.

Figure 20 illustrates schematically a keyboard and an inventive control means connected to one side wall of the keyboard.

For the sake of simplicity, the following description is restricted to a right-handed user. Those changes necessary to the control means in order to adapt said means to a left-handed person can be readily achieved, however.

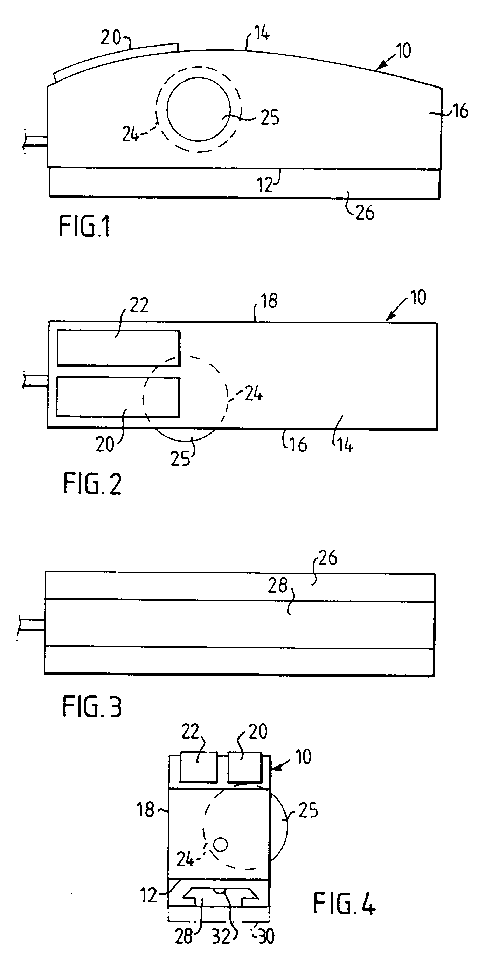

The control means illustrated in Figures 1-4 comprises a housing 10 having walls which form a bottom 12, a top 14 and two sides 16, 18.

Arranged on the front part of the top of the housing are two click keys or buttons 20, 22, which can be manipulated with the index finger and long finger of one hand.

Arranged on the left side of the housing (the right side in the case of a left-handed user) is a control device whose movements are transmitted to a computer, with the aid of known devices and electronics, for the purpose of controlling movement of a cursor (not shown) on a display unit. The control device may have the form of a lever capable of being moved in different directions, a pressure pad on which pressure is applied at different points around its centre, etc. However, in its simplest form, the control device comprises a ball 24 journalled for rotation in the housing and having a part 25 which is freely accessible on the left side of the housing.

Firmly attached to the bottom of the housing is an insert 26 which has formed therein a dovetail groove 28 and which can be removably inserted onto a corresponding bottom part 30 and capable of being locked in at least one position with the aid of a spring-biased ball 32.

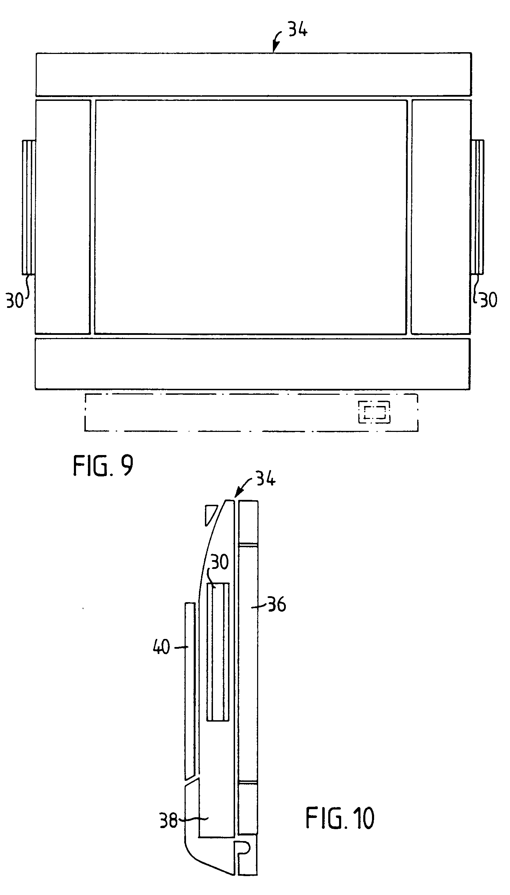

The bottom part 30 is, in turn, attached to the two side walls or edges of the display unit 34 illustrated in Figures 9 and 10, this display unit comprising a screen plate 36 and an illuminating unit 38 attached to the rear side of the plate.

The bottom part 30 may also comprise part of an insert or adapter which can be detachably clamped to different side edges of the screen, for instance with the aid of a clamp screw.

A collapsible frame or stand 40 is used to position the display unit at an angle to a table surface.

The display unit 34 is a light, flat unit which can be held freely in the hands of the user or placed on the user's knee, while enabling the control means detachably connected to one edge of the unit to be readily manipulated with the fingers of one hand.

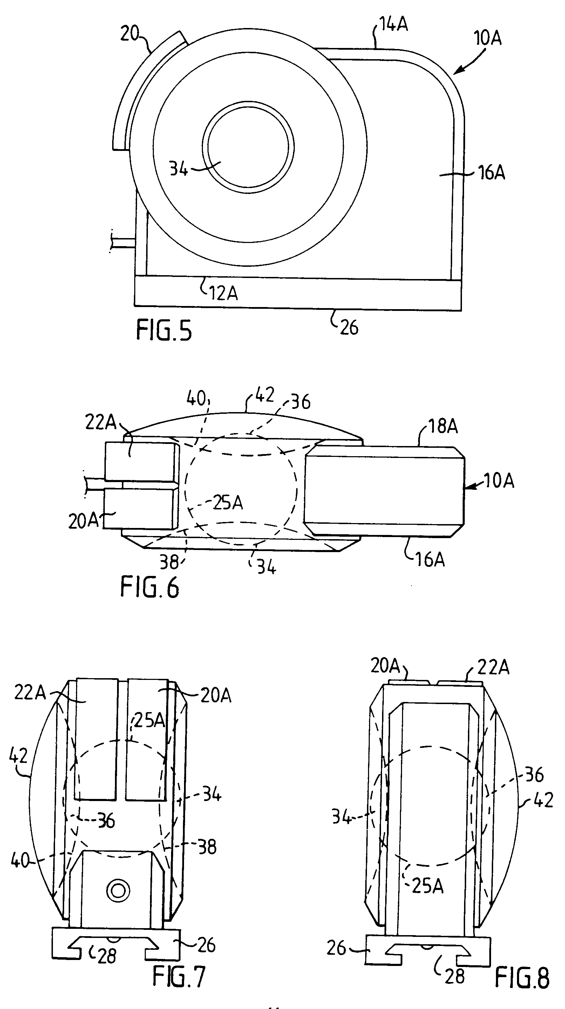

The embodiment illustrated in Figures 5-8 also includes a housing 10A having walls which form the bottom 12A, the top 14A and two sides 16A, 18A of the housing. This control means also includes two click keys 20A, 22A, which are only partially located on the top of the housing and the remainder of which extends down over one end of said housing.

The ball 24A is journalled for rotation in the housing and parts of the ball extends freely through openings in the two sides of the housing and lies with its freely accessible parts 34, 36 in recesses 38, 40 in the housing sides.

A guard plate 42 is detachably clamped over the right-hand recesss 40, in a manner to enable the ball to rotate unimpeded, whereas the free part 34 of the ball on the left of the housing can be reached easily with the thumb of the right hand which grips over the housing.

If the control means is to be used by a left-handed person, the guard plate is moved to the other side of the housing, so that the right ball-part 36 is accessible to the thumb of the left hand.

At the same time, the electronics are reversed, for instance with the aid of a lever (not shown), which may be mounted on the computer. Alternatively, the program may be modified so that the cursor will be moved in one and the same direction in correspondence with similar movement of the ball, irrespective of whether the right thumb or the left thumb is used.

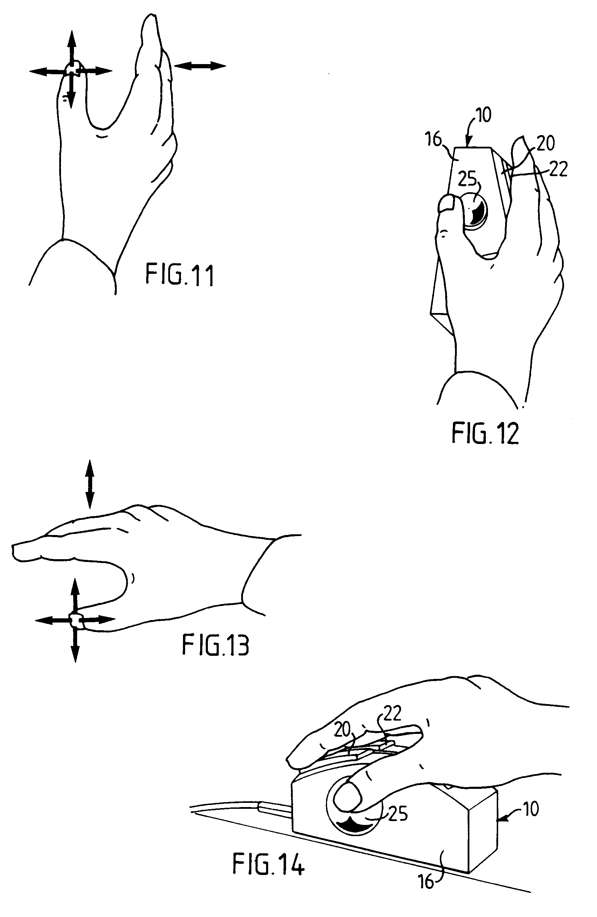

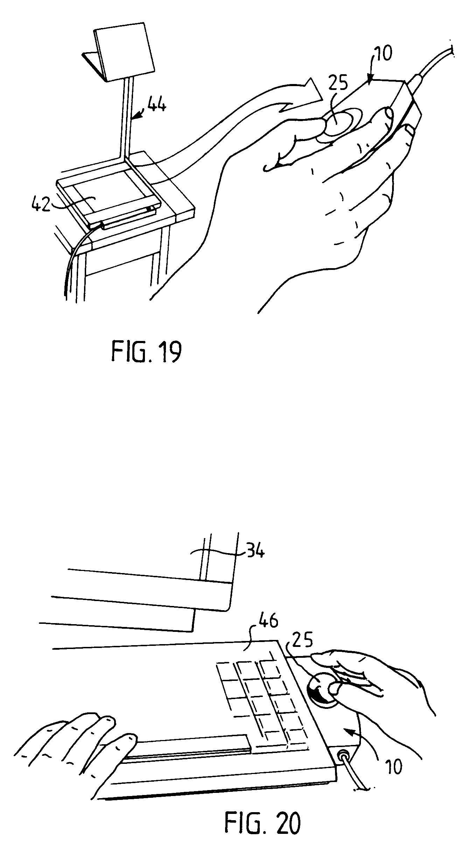

Figures 11 and 12 illustrate schematically that the housing 10 can be held freely in the hand (Figure 19) or gripped when it is attached to the one edge of the display unit (Figure 8), and also show that the thumb has a favourable position ergonomically, so as to be able to move in all directions for the purpose of manipulating the ball 25 or some corresponding control device.

The click keys 20, 22 may be manipulated comfortably with the index finger and long finger at the same time.

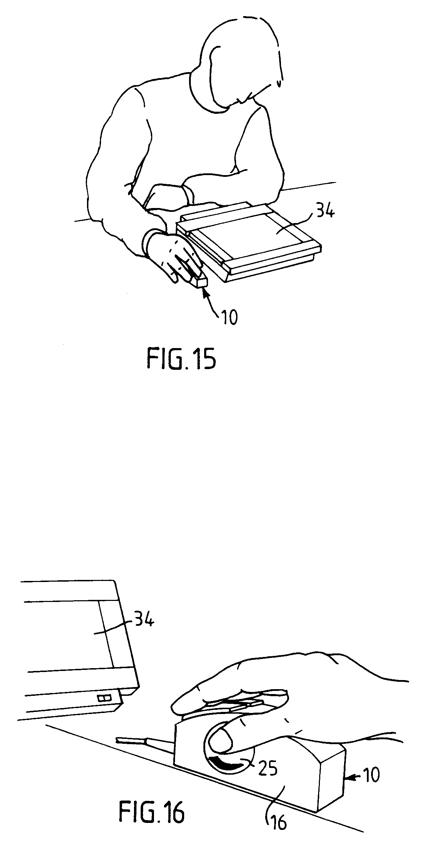

Figures 13 and 14 illustrate the hand resting on the housing 10 when the housing is placed on a table in front of a horizontal display unit 34 (Figure 15) or a display unit which is inclined to the horizontal (Figure 16).

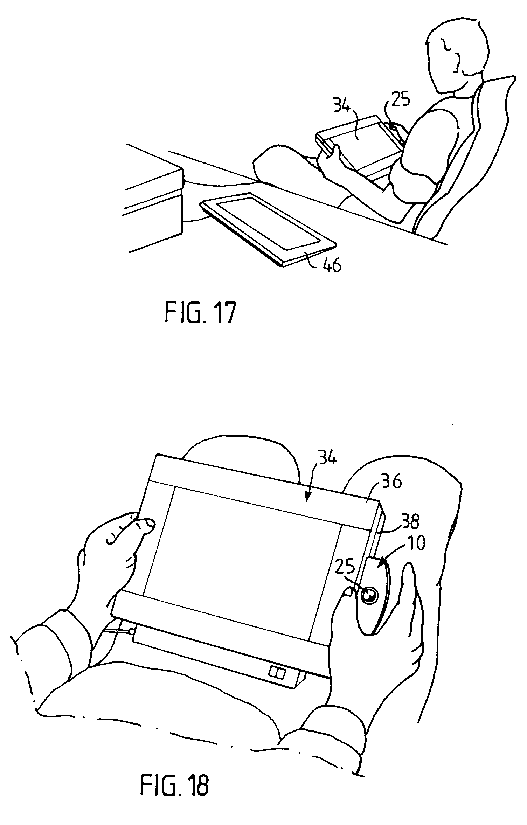

Figures 17 and 18 show the user leaning comfortably backwards in a chair and holding the display unit 34 on his knee, with the housing 10 of the control means attached to one side edge of the unit, so that the ball 25 can be manipulated comfortably with the thumb.

The user may also stand upright and hold the display unit 34 with both hands, using roughly the same grip as that shown in Figures 17 and 18.

Figure 19 illustrates a screen plate 42, a so-called OH-screen plate, placed on an overhead apparatus 44. The cursor is guided on the OH-screen plate by manipulating the ball 25 in the housing 10 of the control means. Thus, the user does not need the assistance of a colleague to control the cursor on a table installed display unit, since the user is able to select the most suitable position in relation to the fabric screen and himself control the cursor and the enlarged image of the screen plate projected onto a fabric screen or onto a wall.

Finally, Figure 20 illustrates a keyboard 46 to which the housing 10 of the control means is detachably connected to one side edge thereof, e.g. with the aid of the aforedescribed dovetail connection. When the control means is held by the user, the thumb can be used comfortably to manipulate the ball 25.

As before mentioned, the invention is not restricted to thumb-operable control devices in the form of a ball for the purpose of controlling cursor movement, and that a plurality of other thumb-operable control devices attached to one side of the housing can be used within the scope of the invention.

## Claims

1. A control means for use with a computer system having an electronic display screen unit, for instance an LCD-unit, for controlling cursor movement on the screen, said control means comprising a separate housing having a bottom, two sides and a top and carrying a number of manually operable control devices for delivering signals to the computer, of which a first control device is actuable for movement of a cursor or a pointer in desired directions on the electronic display unit or a projected image of said display, and of which control devices at least one further, normally two or three, has the form of a so-called click key mounted at least partially on the top of the housing, **characterized** in that the first control device (25; 25A) is mounted on one side wall (16; 16A or 18A) of the housing (10; 10A) in a manner such as to enable said device to be operated with the thumb of the hand holding the control means around the sidewalls and the upper side thereof, while enabling, at the same time, the other control devices, such as the click key or click keys (20, 22; 20A, 22A) on the upper side of the housing to be operated with the other fingers of the hand, when the control means is held in said one hand.

2. A control means according to Claim 1, **characterized** in that the side wall of the housing at which the first control device is mounted extends substantially perpendicular to the bottom and the top of said housing.

3. A control means according to Claim 1, **characterized** in that the first control device is a rotatably journalled ball (25A) which extends partially through openings provided in both side walls of the housing, such as to enable the housing to be held in the left or the right hand and such as to enable the ball to be rotated with the thumb of the respective hand.

4. A control means according to Claim 3, **characterized** by a detachably guard plate (42) which is attached to that side wall of the housing on which the ball shall not be manipulated and which permits free rotation of the inwardly lying ball, whereas the ball is accessible to the thumb of the hand on the opposite side of the housing.

5. A control means according to any one of the preceding Claims intended for use with a computer system and comprising a thin, light and freely movable flat electronic display unit, for instance an LCD-unit, to which the control means is connected, said control means comprising a housing which houses manually operable control devices, of which a first control device functions to control cursor movement on the display unit to desired positions thereon, and which housing further includes mechanical, electronic and/or optical components for transmitting signals from the control devices to the computer, **characterized** in that the housing (10, 10A) of the control means is detachably connected to one side edge of the display unit (34) via the bottom of said housing; in that the cursor control device (25; 25A) is mounted on that side of the housing which faces in the same direction as the front side of the display unit and is located in a position such that the thumb of the hand gripping around the housing is able to manipulate the cursor control device while the other fingers of the hand are able to manipulate remaining control devices (20, 22; 20A, 22A) at the same time, whereby the thus obtained display unit with control means is capable of being moved as a separate unit between different positions in relation to the user, i.e. in a horizontal and/or inclined position on a table, or held freely in the hands and, for instance, placed on the user's knee, wherein the thumb of the user's hand is in contact with the cursor control device of the control means and the remaining fingers are in contact with remaining control devices, such as click keys, in all positions.

6. A control means according to Claim 5, **characterized** in that the control means housing is connected directly to one side edge of the display unit.

7. A control means according to Claim 1 used with a computer system which includes a keyboard, **characterized** in that the bottom of the housing is connected to one side edge of the keyboard (46); and in that the first control device for controlling curser movement is mounted on that side of the housing which faces in the same direction as the upper surface of the keyboard.

8. A control means according to Claim 7, **characterized** in that the housing is detachably connected to one side edge of the keyboard.

9. A control means according to Claim 5 or 8, **characterized** in that there is provided on the underside of the control means an insert (26) or a so-called adapter which can be detachably connected to a corresponding coupling part (30) on one side edge of a flat display unit or on one side edge of a keyboard.

10. A control means according to Claim 9, **characterized** in that the insert and coupling part can be connected together through the medium of a dovetail connection.

11. A control means according to Claim 9 or 10, **characterized** in that the coupling part (30) is connected with a clamping device which can be clamped on the edge of different types of display units.

12. A control means according to any one of the preceding claims, **characterized** in that the control means housing (10) has a greatest vertical extension which is greater than the greatest width extension of the housing.

13. A control means according to any one of the preceding claims, **characterized** in that communication of the control means with the computer system is effected in a cordless fashion, for instance with the aid of infrared beams in a known manner.

14. A control means according to any one of Claims 1-12, **characterized** in that communication of the control means with the computer system is effected with the aid of a cable for optical communication.

## Patentansprüche

1. Steuervorrichtung für ein Computersystem mit einem elektronischen Bildschirm, beispielsweise einer LCD-Einheit, zum Steuern der Bewegung des Leuchtpfeiles auf dem Bildschirm, wobei die Steuervorrichtung ein getrenntes Gehäuse mit einer Bodenwand, zwei Seitenwänden und einer oberen Wand und mehrere handbetätigbare Steuervorrichtungen zum Abgeben von Signalen an den Computer aufweist, von denen eine erste Steuervorrichtung zur Bewegung eines Leuchtpfeiles oder eines Zeigers in gewünschten Richtungen auf dem elektronischen Bildschirm oder einem projizierten Bild des Bildschirms betätigbar ist, und von den Steuervorrichtungen wenigstens eine weitere, normalerweise zwei oder drei, die Form einer sogenannten Drucktaste hat, die wenigstens teilweise an der oberen Wand des Gehäuses befestigt sind,
dadurch **gekennzeichnet,** daß die erste Steuervorrichtung (25; 25A) an einer Seitenwand (16; 16A oder 18A) des Gehäuses (10, 10A) so befestigt ist, daß die betreffende Vorrichtung mit dem Daumen derjenigen Hand betätigt werden kann, die die Steuervorrichtung an ihren Seitenwänden und ihrer oberen Wand umgreift, während gleichzeitig die anderen Steuervorrichtungen, beispielsweise die Drucktasten (20, 22; 20A, 22A) auf der Oberseite des Gehäuses mit den anderen Fingern der Hand betätigt werden können, wenn die Steuervorrichtung in dieser einen Hand gehalten wird.

2. Steuervorrichtung nach Anspruch 1, dadurch gekennzeichnet, daß die Seitenwand des Gehäuses, an der die erste Steuervorrichtung befestigt ist, im wesentlichen senkrecht zur Boden- und zur oberen Wand des Gehäuses verläuft.

3. Steuervorrichtung nach Anspruch 1, dadurch gekennzeichnet, daß die erste Steuervorrichtung eine drehbar gelagerte Kugel (25A) ist, die sich teilweise durch Öffnungen hindurch erstreckt, die in beiden Seitenwänden des Gehäuses vorgesehen sind, so daß das Gehäuse mit der linken oder rechten Hand gehalten werden kann und daß die Kugel mit dem Daumen der jeweiligen Hand verdreht werden kann.

4. Steuervorrichtung nach Anspruch 3, gekennzeichnet durch eine abnehmbare Schutzplatte (42a), die an derjenigen Seitenwand des Gehäuses angebracht ist, an der die Kugel nicht betätigt werden soll und die eine freie Drehung der innen liegenden Kugel ermöglicht, wohingegen die Kugel an der gegenüberliegenden Seite des Gehäuses für den Daumen der Hand frei zugänglich ist.

5. Steuervorrichtung nach einem der vorangegangenen Ansprüche, der zur Verwendung bei einem Computersystem mit einem dünnen, leichten und frei bewegbare, flachen, elektronischen Bildschirm bestimmt ist, beispielsweise einem LCD-Bildschirm, mit dem die Steuervorrichtung in Verbindung steht, wobei diese Steuervorrichtung ein Gehäuse umfaßt, das von Hand betätigbare Steuervorrichtungen enthält, von denen eine erste Steuervorrichtung dazu dient, die Bewegung eines Leuchtpfeiles auf dem Bildschirm zu gewünschten Stellen zu steuern, wobei das Gehäuse ferner mechanische, elektronische und/oder optische Baugruppen zum Übertragen der Signale von den Steuervorrichtungen auf dem Computer enthält,
dadurch **gekennzeichnet,**
daß das Gehäuse (10, 10A) der Steuervorrichtung mit einer Seitenkante der Anzeigevorrichtung (34) über den Boden des Gehäuses abnehmbar in Verbindung steht;
daß die Steuervorrichtung (25; 25A) für den Leuchtpfeil an derjenigen Seite des Gehäuses angebracht ist, die in dieselbe Richtung weist wie die Vorderseite des Bildschirmes und daß sie ein einer solchen Stellung angebracht ist, daß der Daumen derjenigen Hand, die das Gehäuse umgreift, in der Lage ist, die Steuervorrichtung für den Leuchtpfeil zu betätigen, während die anderen Finger der Hand gleichzeitig die übrigen Steuervorrichtungen (20, 22; 20A, 22A) betätigen können, wobei eine so ausgebildete Bildschirmeinheit mit der Steuervorrichtung in der Lage ist, als separate Einheit zwischen verschiedenen Stellungen in bezug auf die Benutzerperson bewegt zu werden, das heißt, in einer horizontalen und/oder geneigten Stellung auf einem Tisch, oder daß sie frei in den Händen gehalten werden kann und daß sie beispielsweise auf den Knien der Benutzerperson liegen kann, wobei in allen Stellungen der Daumen der Benutzerperson mit der Steuervorrichtung für den Leuchtpfeil in Berührung ist und wobei die übrigen Finger in allen Stellungen mit den verbleibenden Steuervorrichtungen, beispielsweise den Drucktasten, in Berührung stehen.

6. Steuervorrichtung nach Anspruch 5, dadurch gekennzeichnet, daß das Gehäuse der Steuervorrichtung direkt mit einer Seitenkante des Bildschirmes verbunden ist.

7. Steuervorrichtung nach Anspruch 1, der bei einem Computersystem verwendet wird, das eine Tastatur hat dadurch gekennzeichnet, daß der Boden des Gehäuses mit einer Seitenkante der Tastatur (46) verbunden ist und
daß die erste Steuervorrichtung zum Steuern der Bewegung des Leuchtpfeiles an derjenigen Seite des Gehäuses angebracht ist, die in dieselbe Richtung weist wie die obere Fläche der Tastatur.

8. Steuervorrichtung nach Anspruch 7, dadurch gekennzeichnet, daß das Gehäuse abnehmbar mit einer Seitenkante der Tastatur in Verbindung steht.

9. Steuervorrichtung nach einem der Ansprüche 5 oder 8, dadurch gekennzeichnet, daß an der Unterseite der Steuervorrichtung ein Einschub (26) oder ein sogenannter Adapter angebracht ist, der abnehmbar mit einem entsprechenden Kupplungsteil (30) an einer Seitenkante der flachen Bildschirmeinheit oder an einer Seitenkante der Tastatur verbunden ist.

10. Steuervorrichtung nach Anspruch 9, dadurch gekennzeichnet, daß der Einschub und das Kupplungsteil mit Hilfe einer Schwalbenschwanzverbindung miteinander in Verbindung stehen.

11. Steuervorrichtung nach einem der Ansprüche 9 oder 10, dadurch gekennzeichnet, daß das Kupplungsteil (30) mit einer Klemmvorrichtung in Verbindung steht, die an einer Kante verschiedener Bauarten von Bildschirmeinheiten angeklemmt werden kann.

12. Steuervorrichtung nach einem der vorangegangenen Ansprüche, dadurch gekennzeichnet, daß das Gehäuse (10) der Steuervorrichtung eine größte vertikale Höhe hat, die größer ist als die größte Breite des Gehäuses.

13. Steuervorrichtung nach einem der vorangegangenen Ansprüche, dadurch gekennzeichnet, daß die Verbindung zwischen der Steuervorrichtung und dem Computersystem drahtlos ist, beispielsweise mit Hilfe von bekannten Infrarotstrahlen.

14. Steuervorrichtung nach einem der Ansprüche 1 bis 12, dadurch gekennzeichnet, daß die Verbindung zwischen der Steuervorrichtung und dem Computersystem mit Hilfe eines Kabels für eine optische Übertragung erzeugt wird.

## Revendications

1. Dispositif de commande à utiliser avec un système de calculateur ayant une unité à écran d'affichage électronique, par exemple une unité LCD, pour commander le mouvement d'un curseur sur l'écran, ledit dispositif de commande comportant un boîtier séparé ayant un fond, deux côtés et un dessus et portant un certain nombre d'éléments de commande pouvant être actionnés manuellement pour délivrer des signaux au calculateur, dont un premier élément de commande peut être actionné pour déplacer un curseur ou un pointeur dans des directions souhaitées sur l'unité d'affichage électronique ou une image projetée dudit affichage, éléments de commande dont au moins un autre, normalement deux ou trois autres, ont la forme d'une touche dite à déclic montée au moins partiellement sur le dessus du boîtier, caractérisé en ce que le premier élément de commande (25 ; 25A) est monté sur une paroi latérale (16 ; 16A ou 18A) du boîtier (10 ; 10A) de manière à permettre audit élément d'être actionné avec le pouce de la main tenant l'élément de commande autour de ses parois latérales et de son côté supérieur, tout en permettant, en même temps, aux autres éléments de commande, tels que la touche à déclic ou les touches à déclic (20, 22 ; 20A, 22A) sur le côté supérieur du boîtier d'être actionnés avec les autres doigts de la main, lorsque le dispositif de commande est tenu dans ladite main.

2. Dispositif de commande selon la revendication 1, caractérisé en ce que la paroi latérale du boîtier sur laquelle le premier élément de commande est monté s'étend sensiblement perpendiculairement du dessous jusqu'au-dessus dudit boîtier.

3. Dispositif de commande selon la revendication 1, caractérisé en ce que le premier élément de commande est une boule (25A) montée de façon à pouvoir tourner qui fait saillie partiellement à travers des ouvertures prévues dans les deux parois latérales du boîtier, afin de permettre au boîtier d'être tenu dans la main gauche ou droite et à permettre à la boule d'être tournée avec le pouce de la main respective.

4. Dispositif de commande selon la revendication 3, caractérisé par une plaque de garde amovible (42) qui est montée sur la paroi latérale du boîtier sur laquelle la boule ne sera pas manipulée et qui permet une rotation libre de la boule s'étendant vers l'intérieur, alors que la boule est accessible au pouce de la main sur le côté opposé du boîtier.

5. Dispositif de commande selon l'une quelconque des revendications précédentes, prévu pour être utilisé avec un système de calculateur, et comportant une unité d'affichage électronique mince, légère, plate et mobile librement, par exemple une unité LCD, à laquelle le dispositif de commande est connecté, ledit dispositif de commande comportant un boîtier qui renferme des éléments de commande pouvant être actionnés manuellement, dont un premier élément de commande fonctionne de façon à commander le mouvement d'un curseur sur l'unité d'affichage vers des positions souhaitées sur celle-ci, lequel boîtier comprend en outre des composants mécaniques, électroniques et/ou optiques pour transmettre des signaux des éléments de commande au calculateur, caractérisé en ce que le boîtier (10, 10A) du dispositif de commande est relié de façon amovible à un bord latéral de l'unité d'affichage (34) par l'intermédiaire du dessous dudit boîtier ; en ce que l'élément (25 ; 25A) de commande de curseur est monté sur le côté du boîtier qui est tourné dans la même direction que le côté avant de l'unité d'affichage et est placé dans une position telle que le pouce de la main enserrant le boîtier est capable de manipuler l'élément de commande du curseur tandis que les autres doigts de la main sont capables de manipuler les éléments de commande restants (20, 22 ; 20A, 22A), en même temps, grâce à quoi l'unité d'affichage ainsi obtenue est capable, avec le dispositif de commande, d'être déplacée sous la forme d'une unité séparée entre différentes positions par rapport à l'utilisateur, c'est-à-dire dans une position horizontale et/ou inclinée sur une table, ou tenue librement dans les mains et, par exemple, placée sur le genou de l'utilisateur, le pouce de la main de l'utilisateur étant en contact avec l'élément de commande du curseur du dispositif de commande et les autres doigts étant en contact avec les autres éléments de commande, tels que des touches à déclic, dans toutes les positions.

6. Dispositif de commande selon la revendication 5, caractérisé en ce que le boîtier du dispositif de commande est relié directement à un bord latéral de l'unité d'affichage.

7. Dispositif de commande selon la revendication 1, utilisé avec un système de calculateur qui comprend un clavier, caractérisé en ce que le dessous du boîtier est relié à un bord latéral du clavier (46) ; et en ce que le premier élément de commande destiné à commander le mouvement d'un curseur est monté sur le côté du boîtier qui est tourné dans la même direction que la surface supérieure du clavier.

8. Dispositif de commande selon la revendication 7, caractérisé en ce que le boîtier est relié de façon amovible à un bord latéral du clavier.

9. Dispositif de commande selon la revendication 5 ou 8, caractérisé en ce qu'il est prévu sur le côté inférieur du dispositif de commande un élément rapporté (26) ou un élément appelé adaptateur qui peut être relié de façon amovible à une pièce d'accouplement correspondante (30) sur un bord latéral d'une unité plate d'affichage ou sur un bord latéral d'un clavier.

10. Dispositif de commande selon la revendication 9, caractérisé en ce que l'élément rapporté et la pièce d'accouplement peuvent être reliés entre eux au moyen d'un assemblage en queue d'aronde.

11. Dispositif de commande selon la revendication 9 ou 10, caractérisé en ce que la pièce d'accouplement (30) est reliée à un dispositif de bridage qui peut être bridé sur le bord de différents types d'unités d'affichage.

12. Dispositif de commande selon l'une quelconque des revendications précédentes, caractérisé en ce que le boîtier (10) du dispositif de commande possède une étendue verticale maximale qui est plus grande que l'étendue maximale en largeur du boîtier.

13. Dispositif de commande selon l'une quelconque des revendications précédentes, caractérisé en ce qu'une communication du dispositif de commande avec le système de calculateur est effectuée sans cordon, par exemple à l'aide de faisceaux infrarouges, d'une manière connue.

14. Dispositif de commande selon l'une quelconque des revendications 1-12, caractérisé en ce qu'une communication du dispositif de commande avec le système de calculateur est effectuée à l'aide d'un câble pour une communication optique.
